# EUROPÄISCHE PATENTANMELDUNG

(11) **EP 3 383 007 A1**
(43) Veröffentlichungstag der Anmeldung: **03.10.2018**
(21) Anmeldenummer: 17401130.4
(22) Anmeldetag: 22.12.2017
(51) Int. Cl.: H04M 1/03, H04M 1/60, H04M 1/725, H04B 1/3827

(54) **BELT-PACK ENDGERÄT**

(30) Priorität: 28.03.2017 DE 102017106668; 17.07.2017 DE 102017116002
(71) Anmelder: RIEDEL Communications International GmbH, 42109 Wuppertal (DE)
(72) Erfinder: Riedel, Thomas, 42109 Wuppertal (DE)
(74) Vertreter: Roche, von Westernhagen & Ehresmann

(57) **Zusammenfassung**

Die Erfindung betrifft unter anderem ein mobiles, von einem Benutzer (32) tragbares und als Belt-Pack (10) ausgebildetes Endgerät zur Verwendung in einem Intercom-Netzwerk (17), umfassend ein Gehäuse (44) mit einem Anschluss (16) für ein Headset (11) mit einem Headset-Mikrophon (13) und einem Headset-Lautsprecher (12), und weiter umfassend ein Kommunikationsmodul (25a), mit dem Audioinformationen an andere Teilnehmer (19a, 19b) des Intercom-Netzwerkes drahtlos übermittelbar sind. Die Besonderheit besteht unter anderem darin, dass in oder an dem Gehäuse (44) ein Mikrophon (27) und ein Lautsprecher (28) angeordnet ist.

## Beschreibung

Die Erfindung bezieht sich auf ein Belt-Pack gemäß dem Oberbegriff des Anspruches 1.

Als Belt-Pack im Sinne dieser Patentanmeldung wird ein mobiles Endgerät angesehen, das in einem Intercom-Netzwerk verwendet werden kann. Ein solches Belt-Pack ist von einem Benutzer transportierbar, und weist insbesondere eine Einrichtung auf, mit der das Belt-Pack an einem Gürtel einer Bedienperson auf einfache Weise festlegbar ist. Das Belt-Pack ist ohne weiteres tragbar, und ist hierzu kompakt und handlich ausgebildet. Es dient der Bereitstellung einer drahtlosen Duplex-Audio-Kommunikation mit anderen Teilnehmern des Intercom-Netzwerkes. Als Duplex-Betrieb wird ein gleichzeitiger Sprech- und Hörbetrieb bezeichnet. Das Belt-Pack weist hierzu einen Anschluss für ein Headset auf. Das Headset umfasst grundsätzlich ein Headset-Mikrophon und einen Headset-Lautsprecher.

Eine Bedienperson kann das Belt-Pack am Gürtel, aber beispielsweise auch an der Hosentasche oder an einem anderen Kleidungsstück befestigen und bei angeschlossenem Headset freihändig sprechen und hören. Das Belt-Pack ermöglicht unter Zuhilfenahme eines innerhalb des Gehäuses angeordneten Kommunikationsmoduls eine Drahtlosverbindung mit anderen Teilnehmern des Intercom-Netzwerkes.

Derartige Intercom-Netzwerke werden beispielsweise bei Großveranstaltungen, wie beispielsweise Musikveranstaltungen, Schauspiel- oder Sportveranstaltungen aufgebaut, insbesondere temporär dort eingesetzt.

Mobile Endgeräte, oder Belt-Packs, nach dem Oberbegriff des Anspruches 1, werden von der Anmelderin seit geraumer Zeit entwickelt und gefertigt.

Ausgehend von einem druckschriftlich nicht belegbaren mobilen Endgerät gemäß dem Oberbegriff des Anspruches 1 besteht die Aufgabe der Erfindung darin, dieses Endgerät derartig weiter zu entwickeln, dass eine komfortablere Bedienung möglich wird.

Die Erfindung löst diese Aufgabe mit den Merkmalen des Anspruches 1, insbesondere mit denen des Kennzeichenteils, und ist insbesondere dadurch gekennzeichnet, dass an dem Gehäuse ein Mikrophon und ein Lautsprecher angeordnet ist.

Das Prinzip der Erfindung besteht darin, in das Belt-Pack ein zusätzliches Mikrophon und einen zusätzlichen Lautsprecher zu integrieren. Über das Mikrophon und den Lautsprecher kann eine Bedienperson ebenfalls eine Audio-Kommunikation mit anderen Teilnehmern des Intercom-Netzwerkes durchführen.

Damit kann das Belt-Pack beispielsweise für einen Sprech- oder Hörbetrieb verwendet werden, wenn das Headset nicht an das Belt-Pack angeschlossen ist. Es besteht aber auch die Möglichkeit, die Mikrophon- und Lautsprecherkombinationen zusätzlich zu dem angeschlossenen Headset zu betreiben.

Bei Großveranstaltungen, die sich beispielsweise über mehrere Stunden erstrecken können, haben unterschiedliche Bedienpersonen teilweise Pausenzeiten. Um z. B. in dieser Pausenzeit das Headset abnehmen zu können, und um dennoch an der Audiokommunikation teilnehmen zu können, kann das in das Gehäuse integriere Mikrophon und der in das Gehäuse integrierte Lautsprecher bei Bedarf aktiviert, d. h. eingeschaltet oder zugeschaltet werden. So kann das Belt-Pack beispielsweise auf einen Pausentisch gestellt werden, und ermöglicht den Teilnehmern - während diese beispielsweise pausieren - die Durchführung einer Audio-Kommunikation mit anderen Teilnehmern des Intercom-Netzwerkes, ohne, dass das Erfordernis besteht, das Headset anzuschließen und/oder zu verwenden.

Die Erfindung bezieht sich auf ein mobiles Endgerät zur Verwendung in einem Intercom-Netzwerk. Als Intercom-Netzwerk gemäß der vorliegenden Patentanmeldung wird ein Netzwerk verstanden, über welches im sogenannten Wechselstellenbetrieb, dem Duplex-Betrieb, Audio-Informationen übermittelt werden. Dieses Netzwerk kann z. B. ein oder mehrere stationäre Teilnehmer, sogenannte Sprechstellen, und/oder z. B. ein oder mehrere mobile Teilnehmer, z. B. Belt-Packs oder mobile Mikrophone, aufweisen. Auch kann das Intercom-Netzwerk ein oder mehrere Vermittlungsstellen, sowie Repeater, Antennen oder dergleichen, aufweisen.

Intercom-Netzwerke des Standes der Technik, die auf die Anmelderin zurückgehen, sind z. B. in den deutschen Patentanmeldungen DE 10 2014 011 963 A1, DE 10 2016 123 966 A1 und DE 10 2016 123 968 A1 beschrieben. Auf diese Schutzrechtsanmeldungen wird explizit, auch zum Zwecke des Einschlusses eines oder mehrerer Merkmale in den Inhalt der vorliegenden Patentanmeldung, Bezug genommen.

Das mobile Endgerät gemäß Anspruch 1 ist in einem solchen Intercom-Netzwerk verwendbar. Es ist von einem Benutzer auf herkömmliche Weise tragbar, und als Belt-Pack ausgebildet. Als Belt-Pack wird insbesondere ein an einem Gürtel einer Bedienperson befestigbares Endgerät bezeichnet, welches beispielsweise Abmessungen in der Größenordnung von 5 cm mal 10 cm mal 15 cm aufweist.

Das mobile Endgerät umfasst ein Gehäuse, das insbesondere aus Kunststoff bestehen kann. An dem Gehäuse ist ein Anschluss für ein Headset vorgesehen. Als Headset wird eine Kombination eines Headset-Mikrophons mit einem Headset-Lautsprecher bezeichnet, wobei diese Kombination von der Bedienperson aufsetzbar ist. In der Regel ist das Headset mit einem Kabel ausgestattet, an dessen Ende ein Stecker vorhanden ist. Das Belt-Pack kann einen Anschluss aufweisen, der als Buchse ausgebildet ist, und zur Aufnahme dieses Steckers dient.

Das Belt-Pack gemäß Anspruch 1 umfasst darüber hinaus ein Kommunikationsmodul. Das Kommunikationsmodul ermöglicht eine drahtlose Übermittlung von Audio-Informationen an andere Teilnehmer des Intercom-Netzwerkes. Diese Übermittlung erfolgt bi-direktional, so dass das an dem Belt-Pack angeordnete Kommunikationsmodul auch Audio-Informationen von anderen Teilnehmern des Intercom-Netzwerkes empfangen kann.

Insbesondere kann das Kommunikationsmodul eine Funkstrecke mit einem anderen Teilnehmer des Intercom-Netzwerkes, z. B. einer Vermittlungsstelle, oder einer Antenne aufbauen. Die Funkstrecke kann insbesondere nach dem DECT-Protokoll operieren. Alternativ zu dem DECT-Protokoll können auch andere Frequenzbereiche, wie beispielsweise die Frequenzbänder VHF, UHF, 2,4 GHz oder 5,8 GHz vorgesehen sein.

Soweit im Rahmen dieser Patentanmeldung von dem DECT-Protokoll die Rede ist, soll dieses beispielhafte Frequenzband an sämtlichen Stellen lediglich exemplarisch für alle denkbaren Frequenzbänder, die von der Erfindung umfasst sind, verstanden werden.

Gemäß der Erfindung sind an dem Gehäuse ein Mikrophon und ein Lautsprecher angeordnet. Insbesondere ist von der Erfindung umfasst, wenn das Mikrophon und der Lautsprecher in das Gehäuse integriert sind.

Weiter vorteilhaft ist vorgesehen, dass Mikrophon und der Lautsprecher jedenfalls nicht über eine Hüll-Kontur des Gehäuses hinaus nach außen vorstehen. Eine Integration von Mikrophon und Lautsprecher an das Gehäuse oder in das Gehäuse kann z. B. auf eine Weise erfolgen, wie sie herkömmlich von anderen Geräten her, z. B. von Sprechfunkgeräten, wie Walkie-Talkies, bekannt ist.

Gemäß einer vorteilhaften Ausgestaltung der Erfindung ist an dem Gehäuse wenigstens ein Schalter angeordnet. Der Schalter, z. B. auch ein programmierbarer Schalter, kann auch in das Gehäuse integriert sein.

Mit dem Schalter kann das Mikrophon oder der Lautsprecher eingeschaltet oder ausgeschaltet werden. Insbesondere kann eine unmittelbare oder mittelbare Betätigung des Schalters durch die Bedienperson erfolgen. In diesem Zusammenhang empfiehlt sich eine Ausbildung des Schalters als Tast- oder Druckschalter.

Von der Erfindung ist auch umfasst, wenn der Schalter programmierbar und/oder über eine Konfigurationseinrichtung ansprechbar ist. Die Konfigurationseinrichtung kann beispielsweise eine oder mehrere programmierbare Tasten umfassen. Z. B. kann unter Zwischenschaltung eines Mikroprozessors eine Konfiguration des Schalters vorgenommen werden.

Gemäß einem ersten Konfigurationszustand des Schalters sind das Mikrophon und der Lautsprecher immer eingeschaltet.

Gemäß einer anderen möglichen Konfiguration des Schalters kann vorgesehen sein, dass das Mikrophon und der Lautsprecher immer eingeschaltet oder immer ausgeschaltet sind, wenn ein Headset über den Anschluss an das Belt-Pack angeschlossen ist.

Eine weitere dritte mögliche Konfiguration kann schließlich die Möglichkeit umfassen, dass das Mikrophon und der Lautsprecher immer ausgeschaltet werden, wenn das Headset über den Anschluss an das Belt-Pack angeschlossen wird. Hierzu kann beispielsweise infolge des Zusammenwirkens zwischen einem Stecker am Ende des Kabels des Headsets mit einem z. B. als Buchse ausgebildeten Anschluss am Belt-Pack eine Schalterbetätigung erfolgen.

Gemäß einer weiteren vorteilhaften Ausgestaltung der Erfindung kann infolge einer Betätigung des Schalters das Mikrophon parallel zu dem Headset-Mikrophon und/oder der Lautsprecher parallel zu dem Headset-Lautsprecher geschaltet werden. Hierdurch bietet sich die Möglichkeit, das Mikrophon und den Lautsprecher parallel zu betreiben. Es ist hierbei insoweit insbesondere nicht erforderlich, das Headset von dem Belt-Pack zu lösen, um Mikrophon und Lautsprecher zu aktivieren.

Gemäß einer weiteren vorteilhaften Ausgestaltung der Erfindung ist vorgesehen, dass im Falle einer Betätigung des Schalters das Mikrophon und/oder der Lautsprecher einschaltbar, und zugleich das Headset-Mikrophon und oder der Headset-Lautsprecher ausschaltbar sind. Dies bietet die Möglichkeit, sicherzustellen, dass z. B. während einer Pause der Bedienperson nur das Mikrophon und der Lautsprecher aktiv sind, das Headset-Mikrophon und der Headset-Lautsprecher aber ausgeschaltet sind.

Gemäß einer vorteilhaften Variante der Erfindung kann darüber hinaus vorgesehen sein, dass über eine Konfiguration des Belt-Packs vorgesehen wird, dass über die Duplexleitung des Headsets ein bestimmter Teilnehmer des Intercom-Netzwerkes oder mehrere bestimmte Teilnehmer des Intercom-Netzwerkes angesprochen werden, und über den Lautsprecher und das Mikrophon ein anderer oder bestimmter Teilnehmer oder mehrere andere bestimmte Teilnehmer des Intercom-Netzwerkes angesprochen werden. Es können insoweit unterschiedliche Kommunikationswege oder Kommunikationsgruppen ermöglicht werden.

Weiter kann gemäß der Erfindung vorgesehen sein, dass bei einer Betriebsart oder Konfigurationsart des erfindungsgemäßen Belt-Packs beispielsweise nur der Lautsprecher aktiv ist, das Mikrophon aber inaktiv ist. Bei dieser Variante kann die Bedienperson beispielsweise während einer Pause hören, ob eine bestimmte Signalisierung erfolgt, um z. B. ihren Einsatz nicht zu verpassen.

Gemäß einer weiteren vorteilhaften Ausgestaltung der Erfindung erfolgt bei der Vornahme einer Verbindung zwischen Headset und Anschluss automatisch ein Ansprechen des Schalters.

Gemäß einer Variante der Erfindung kann insbesondere eine Detektionseinrichtung am Belt-Pack vorhanden sein, die detektiert, ob momentan ein Headset an das Belt-Pack angeschlossen ist. Eine solche Detektionseinrichtung kann beispielsweise einen Mikroschalter oder eine andere geeignete elektronische Einrichtung im Bereich des Anschlusses umfassen, der automatisch angesprochen wird, wenn der headsetseitige Stecker in dem z. B. als Buchse ausgebildeten Anschluss am Belt-Pack eingesteckt wird.

Gemäß einer weiteren vorteilhaften Ausgestaltung der Erfindung ist an dem Gehäuse wenigstens eine Anzeige angeordnet, die einen Funktionszustand des Mikrophones und/oder einen Funktionszustand des Lautsprechers signalisiert. Die Anzeige kann beispielsweise auf optische Weise, beispielsweise unter Zuhilfenahme von LEDs oder dergleichen Lichtquellen, erfolgen, und der Bedienperson anzeigen, in welchem Funktionszustand oder alternativ auch in welchem Konfigurationszustand sich Mikrophon und/oder Lautsprecher befinden.

Eine solche Anzeige kann auch über ein Display erfolgen, beispielsweise ein alphanumerisches Display, das das Belt-Pack aufweist.

Gemäß einer weiteren Ausgestaltung der Erfindung ist an dem Gehäuse wenigstens eine Anzeige angeordnet, die einen Schaltzustand oder einen Konfigurationszustand eines Schalters für das Mikrophon und den Lautsprecher signalisiert oder anzeigt.

Gemäß einer weiteren vorteilhaften Ausgestaltung der Erfindung ist an dem Gehäuse eine Konfigurationseinrichtung angeordnet, mit der das Mikrophon und/oder der Lautsprecher und/oder ein Schalter für das Mikrophon und den Lautsprecher konfigurierbar sind. Eine solche Konfigurationseinrichtung kann beispielsweise programmierbare Tasten umfassen, die von einer Bedienperson ansprechbar sind.

Gemäß einer weiteren vorteilhaften Ausgestaltung der Erfindung ist das Kommunikationsmodul zur Bereitstellung einer Funkverbindung mit anderen Teilnehmern des Intercom-Netzwerkes ausgebildet. Hierfür kann auf herkömmliche Kommunikationsmodule von mobilen Endgeräten, sprich Belt-Packs, zurückgegriffen werden.

Gemäß einer weiteren vorteilhaften Ausgestaltung der Erfindung ist die Funkverbindung nach dem DECT-Standard ausgebildet. Dies ermöglicht einen Rückgriff auf bekannte übliche Funkprotokolle.

Gemäß einer weiteren vorteilhaften Ausgestaltung der Erfindung ist an dem Gehäuse eine Befestigungseinrichtung angeordnet, mit der das Belt-Pack an einem Gürtel einer Bedienperson festlegbar ist. Dies ermöglicht eine Verwendung eines erfindungsgemäßen Belt-Packs in herkömmlicher Weise.

Gemäß einer weiteren vorteilhaften Ausgestaltung der Erfindung ist der Anschluss für das Headset als Buchse zur Aufnahme eines XLR-Steckers, insbesondere eines XLR-female-4-Pol-Steckers ausgebildet.

Weitere Vorteile der Erfindung ergeben sich aus den nicht-zitierten Unteransprüchen sowie anhand der nachfolgenden Beschreibung der in den Figuren dargestellten Ausführungsbeispiele. In den Zeichnungen zeigen:
- Fig. 1: in einer schematischen blockschaltbildartigen Ansicht ein Ausführungsbeispiel eines Intercom-Netzwerkes unter Veranschaulichung eines mobilen Endgerätes gemäß einem Ausführungsbeispiel der Erfindung,
- Fig. 2: in einer vergrößerten schematischen perspektivischen Einzeldarstellung ein Ausführungsbeispiel des erfindungsgemäßen Belt-Packs gemäß Fig. 1 mit zusätzlich angeschlossenem, schematisch dargestellten Headset,

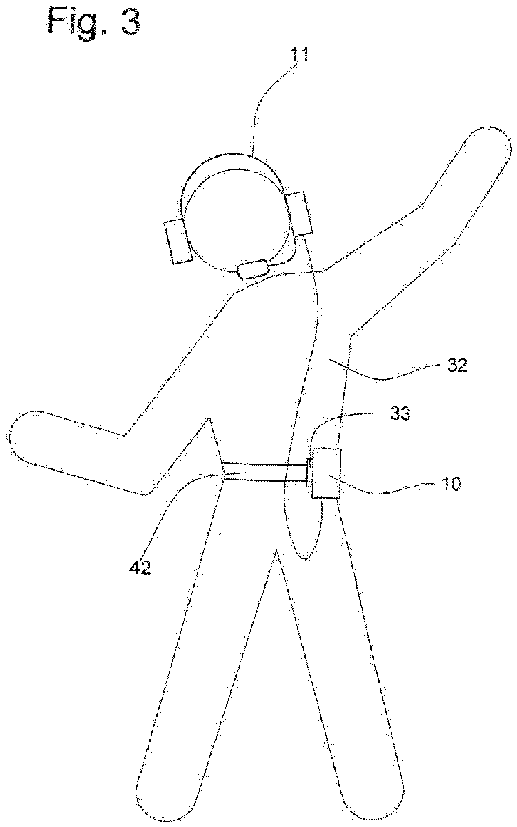

- Fig. 3: in einer schematischen Darstellung eine Bedienperson, die ein erfindungsgemäßes Belt-Pack trägt, und
- Fig. 4: in einer schematischen teilgeschnittenen Ansicht einen Ausschnittsbereich des Belt-Packs der Fig. 2 im Bereich des Anschlusses für das Headset.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Das mobile Endgerät oder Belt-Pack gemäß der Erfindung ist anhand eines Ausführungsbeispiels dargestellt, und wird in den Zeichnungen in seiner Gesamtheit mit 10 bezeichnet:

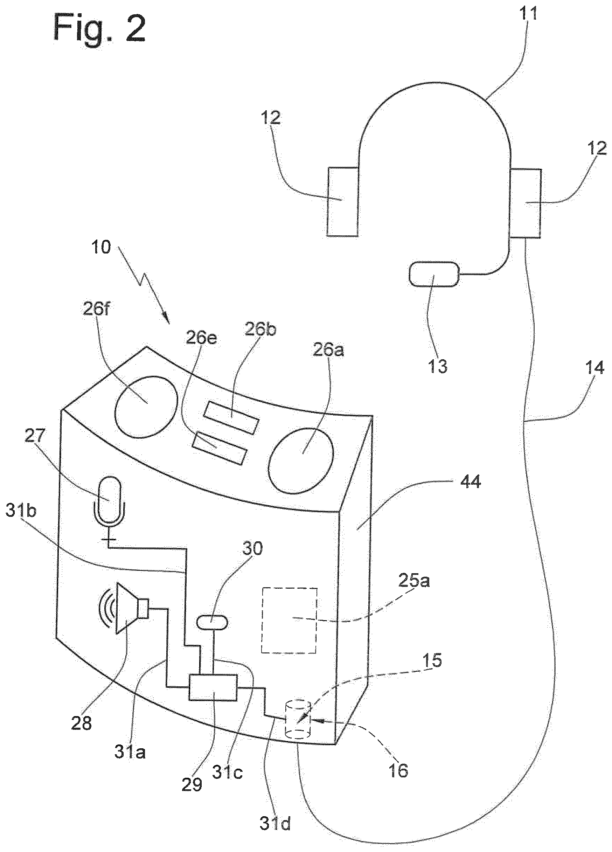

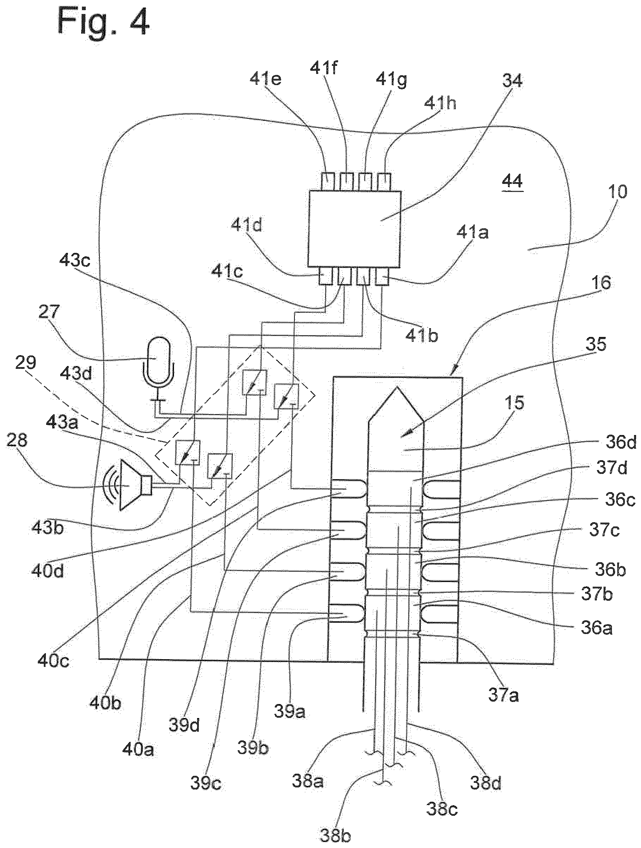

Ausweislich Fig. 2 ist das Belt-Pack ein insgesamt, wie der perspektivischen Ansicht der Fig. 2 entnommen werden kann, etwa quaderförmiger Körper mit einem Gehäuse 44, an das ein Headset 11 angeschlossen werden kann. Ein Headset 11 umfasst herkömmlicherweise einen Headset-Lautsprecher 12 und ein Headset-Mikrophon 13. Das Headset 11 wird über eine Verbindungsleitung 14 an das Belt-Pack 10 angebunden. An dem freien Ende der Verbindungsleitung 14 befindet sich ein Stecker 15. Bei dem Ausführungsbeispiel der Fig. 4 ist der Stecker 15 als Klinkenstecker 35 ausgebildet. Bei anderen, von der Erfindung umfassten Ausführungsformen, ist der Stecker beispielsweise als XLR-female-Stecker, insbesondere als 4-Pol-Stecker, ausgebildet.

Das Headset 11 ermöglicht einen Duplex-Betrieb, d. h., der Benutzer des Headsets 11 kann gleichzeitig hören und sprechen. Hierzu sind zwei gesonderte Leitungspaare erforderlich, so dass die Verbindungsleitung 14 insgesamt wenigstens vier elektrische Leitungen aufweist.

Das Belt-Pack weist zur Aufnahme des Steckers 15 einen Anschluss 16 auf, der bei dem Ausführungsbeispiel als Buchse ausgebildet ist. Die Buchse dient der Aufnahme des Steckers 15.

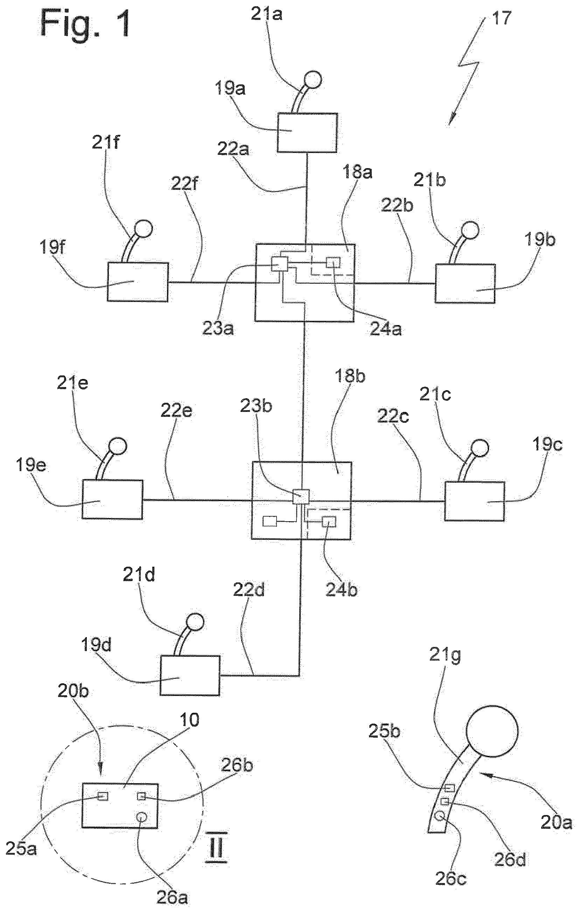

Das Belt-Pack 10 ist ein mobiles Endgerät, das in einem Intercom-Netzwerk verwendet wird. Ein solches Intercom-Netzwerk ist in Fig. 1 in seiner Gesamtheit mit 17 bezeichnet, und soll wie folgt erläutert werden:

Ein Intercom-Netzwerk 17 im Sinne der vorliegenden Patentanmeldung kann z. b. einen oder mehrere stationäre Teilnehmer 19 aufweisen. Die stationären Teilnehmer sind in Fig. 1 mit 19a, 19b, 19c, 19d, 19e, 19f bezeichnet.

Die stationären Teilnehmer bezeichnet man auch als Sprechstelle. Diese weist jeweils ein Mikrophon (s. Mikrophone 21 a, 21 b, 21 c, 21 d, 21 e, 21f) auf, sowie einen nicht dargestellten Lautsprecher.

Jede der Sprechstellen 19a, 19b, 19c, 19d, 19e, 19f ist über eine eigene Verbindungsleitung 22a, 22b, 22c, 22d, 22e, 22f an eine Vermittlungsstelle 18a, 18b angeschlossen. Im Ausführungsbeispiel in Fig. 1 sind zwei Vermittlungsstellen 18a, 18b vorgesehen. Von der Erfindung sind Intercom-Netzwerke 17 umfasst, die eine oder mehrere Vermittlungsstellen 18, 18a, 18b aufweisen.

Jede der Vermittlungsstellen 18a, 18b weist eine eigene Steuerungseinheit 23a, 23b auf. Hier werden insbesondere die Adresswege verwaltet, um sicherzustellen, dass jeder Teilnehmer (z. B. 19a) eine gewünschte direkte Audio-Sprechverbindung zu einem bestimmten gewünschten anderen Teilnehmer (z. B. 19b) herstellen kann. Eine solche direkte Audio-Verbindung zwischen zwei Sprechstellen 19a, 19b wird durch eine entsprechende Konfiguration von in Fig. 1 nicht dargestellten Tasten an den Sprechstellen erreicht.

An jeder der beiden Sprechstellen 18a, 18b ist jeweils auch ein Kommunikationsmodul 24a, 24b angeordnet. Über dieses Kommunikationsmodul 24a, 24b können Audio-Signale an mobile Endgeräte 20a, 20b übermittelt werden. Das mobile Endgerät 20b ist in Fig. 1 schematisch als Belt-Pack angedeutet. Das mobile Endgerät 20b ist in dem Ausführungsbeispiel der Fig. 1 als mobiles Mikrophon 21g dargestellt.

An jedem der mobilen Endgeräte 20a, 20b ist ein entsprechendes Kommunikationsmodul 25a, 25b angeordnet, das eine Funkverbindung zu dem Kommunikationsmodul 24a, 24b an der Vermittlungsstelle 18a, 18b herbeiführen kann.

Angemerkt sei, dass von der Erfindung auch umfasst ist, wenn die mobilen Endgeräte 20a, 20b auch mit anderem Teilnehmern des Intercom-Netzwerkes 17, auch mit nicht dargestellten Teilnehmern, in eine Funkverbindung treten können.

Insbesondere ist gemäß der Erfindung eine bidirektionale Funkverbindung zwischen den mobilen Endgeräten 20a, 20b über die Kommunikationsmodule 25a, 25b mit den Kommunikationsmodulen 24a, 24b an den Vermittlungsstellen möglich.

Sowohl an den stationären Teilnehmern, den Sprechstellen 19a, 19b, 19c, 19d, 19e, 19f, als auch an den mobilen Endgeräten 20a, 20b sind eine Vielzahl konfigurierbarer Tasten oder Schalter 26a, 26b, 26c, 26d, 26e, 26f vorgesehen. Über diese Tasten kann eine Einstellung zahlreicher Funktionen vorgenommen werden. So können die Tasten beispielsweise als Kurzwahltasten konfiguriert werden, um eine direkte Audio-Verbindung zu einem bestimmten Teilnehmer bei Betätigung einer Taste zu gewährleisten.

Im übrigen wird zur Vermeidung von Wiederholungen auf die eingangs erwähnten älteren deutschen Patentanmeldungen der Anmelderin verwiesen.

Ausweislich Fig. 2 werden die erfindungsgemäßen Besonderheiten anhand des Ausführungsbeispiels des erfindungsgemäßen Belt-Packs 10 erläutert. Dem Fachmann ist in diesem Zusammenhang deutlich, dass die übrigen Bestandteile und Funktionen des herkömmlichen Belt-Packs, auch soweit diese bei dem Ausführungsbeispiel der Fig. 2 nicht beschrieben sind, dennoch bei erfindungsgemäßen Belt-Packs mit vorhanden sein können.

So ist insbesondere darauf hinzuweisen, dass die elektronischen Bauteile, die erforderlich sind, um die über das Headset-Mikrophon 13 von dem Belt-Pack 10 empfangenen Signale in elektronische Signale umzuwandeln, und über das Kommunikationsmodul 25 zu emittieren, nicht dargestellt sind. Gleichermaßen zeigt Fig. 2 nicht die erforderlichen elektronischen Bauelemente, die üblicherweise vorgesehen sind, um die von dem Kommunikationsmodul 25a über eine Funkverbindung empfangenen Audio-Signale in elektrische Signale umzuwandeln, um diese den Lautsprechern 12 des Headsets 11 zuzuführen.

Derartige Komponenten sind dem Fachmann bekannt, und sind völlig selbstverständlich auch bei dem erfindungsgemäßen Belt-Pack 10 gemäß Fig. 2 vorhanden.

Ausweislich Fig. 2 sind an dem Gehäuse 44 des Belt-Packs 10 ein Mikrophon 27 und ein Lautsprecher 28 angeordnet. Das Mikrophon 27 ist über eine Verbindungsleitung 31 b und der Lautsprecher 28 ist über eine Verbindungsleitung 31a mit einem angedeuteten Schalter 29 verbunden. Bei dem Ausführungsbeispiel der Fig. 2 ist der Schalter 29 als ein Schalter ausgebildet, der von einer Bedienperson betätigbar ist. Bei weiteren, von der Erfindung umfassten, aber in den Zeichnungen nicht dargestellten Ausführungsbeispielen, ist der Schalter 29 als ein logischer Schalter über eine Konfiguration oder Einstellung ansprechbar, beispielsweise durch Betätigung einer der Einstellungstasten 26a, 26b, 26e oder 26f am Belt-Pack.

Der Schalter 29 ist darüber hinaus mit einer Anzeige 30 verbunden. Die Anzeige 30 kann der Bedienperson einen Schalterzustand anzeigen. Alternativ kann die Anzeige 30 einer Bedienperson einen Funktionszustand oder einen Konfigurationszustand des Lautsprechers 28 oder des Mikrophons 27 anzeigen.

Die Anzeige 30 kann auch von einem Display bereitgestellt sein, das in Fig. 2 nicht dargestellt ist. Von der Erfindung sind z. B. auch Ausführungsbeispiele von Belt-Packs umfasst, die - insbesondere auf der Oberseite des Belt-Packs 10 - ein Display aufweisen.

Der Schalter 29 ist ausweislich Fig. 2 über eine nur schematisch angedeutete Verbindungsleitung 31d mit dem Anschluss 16 verbunden. Alternativ kann vorgesehen sein, dass der Schalter 29, was in den Figuren 2 und 4 nicht dargestellt ist, über eine Steuer- oder Schaltleitung mit einer zentralen Steuereinheit des Belt-Packs 10, z. B. mit einem Mikroprozessor 34 (Fig. 4), verbunden ist.

Darüber hinaus kann der Schalter 29 über eine Verbindungsleitung 31 c mit der Anzeige 30 verbunden.

Ausweislich Fig. 2 kann die Bedienperson 32 das Belt-Pack 10 unter Zuhilfenahme einer Befestigungseinrichtung 33 beispielsweise am Gürtel 42 festlegen. Auch anders ausgebildete Befestigungseinrichtungen, die in den Figuren nicht dargestellt sind, sind von der Erfindung umfasst.

Ausweislich Fig. 4 kann der Anschluss 16 z. B. als Buchse zur Aufnahme eines Klinkensteckers 35 ausgebildet sein. Der Klinkenstecker 35 kann das freie Ende der Verbindungsleitung 14 des Headsets 11 bereitstellen.

Um über das Headset 11 eine Duplex-Hör-Sprechverbindung bereitzustellen, weist die Verbindungsleitung 14 mindestens vier Leiter 38a, 38b, 38c, 38d auf. Entsprechend weist der Klinkenstecker 35 vier Kontaktierungsabschnitte 36a, 36b, 36c, 36d auf, die von den Isolierabschnitten 37a, 37b, 37c, 37d voneinander elektrisch getrennt sind.

Die Buchse 16 kann z. B. mit Federkontakten 39a, 39b, 39c, 39d ausgestattet sein, die nach einem Einschieben des Klinkensteckers 35 in die Buchse 16 für eine elektrische Kontaktierung der Kontaktierungsabschnitte 36a, 36b, 36c, 36d sorgen, und auf diese Weise einen elektrischen Kontakt zwischen den Verbindungsleitungen 40a, 40b, 40c, 40d und den Leitern 38a, 38b, 38c, 38d herstellen.

Angemerkt sei an dieser Stelle, dass das Headset 11 am freien Ende der Verbindungsleitung 14 in vielen Anwendungsfällen nicht einen Klinkenstecker 35, sondern einen XLR-Stecker, insbesondere einen 4-Polfemale-XLR-Stecker aufweist, und die Buchse 16 entsprechende Gegenkontakte bereitstellt. Von der Erfindung ist insbesondere auch die Verwendung von Kontaktstiften anstelle von Federkontakten 39a, 39b, 39c, 39d umfasst.

Ausweislich des Ausführungsbeispiels der Fig. 4 weist das Belt-Pack 10 eine Steuereinheit auf, die z. B. - wie schematisch dargestellt - als Mikroprozessor ausgebildet ist. Der Mikroprozessor kann eine Vielzahl von Anschlusskontakten 41a, 41b, 41c, 41d, 41e, 41f, 41g, 41h aufweisen.

Unter der Annahme, dass die Federkontakte 39a, 39b, 39c, 39d über die Verbindungsleitungen 40a, 40b, 40c, 40d mit den Anschlusskontakten 41a, 41b, 41c, 41 d am Mikroprozessor 34 verbunden sind, kann anhand des schematisch dargestellten Schalters 29 in Fig. 4 erläutert werden, wie das Mikrophon 27 und der Lautsprecher 28 angeschlossen werden können.

So ist ausweislich des Ausführungsbeispiels der Fig. 4 der Schalter 29 derartig ausgebildet, dass er die Anschlusskontakte 41, 41b, 41c, 41 am Mikroprozessor 34 entweder mit den Federkontakten 39a, 39b, 39c, 39d oder mit den Leitungszweigen 43a, 43b, 43c, 43d verbindet. Infolge einer Betätigung des Schalters 29 sind an dem Mikroprozessor 34 also entweder Lautsprecher 28 und Mikrophon 27, oder das Headset 11 mit Headsetmikrophon 13 und Headsetlautsprecher 12 angeschlossen.

Fig. 4 zeigt die Schaltstellung des Schalters 29, in der die Verbindung zwischen Mikroprozessor 34 und Headset 11 getrennt, und die Verbindung zwischen Mikroprozessor 34 und Lautsprecher 28 und Mikrophon 27 geschlossen ist.

In einer anderen, nicht dargestellten Schaltstellung des Schalters 29 wäre der Mikroprozessor 34 mit dem Headset 11 verbunden, und die Verbindung zwischen Mikroprozessor 34 und Lautsprecher 29 und Mikrophon 27 getrennt.

Diese Variante ist allerdings nur eine mögliche Ausgestaltung der Erfindung.

Gemäß einer anderen Variante kann vorgesehen sein, dass die Leitungszweige 43a, 43b, 43c, 43d parallel zu den Verbindungsleitungen 40a, 40b, 40c, 40d geschaltet sind, und der Schalter 29 nur für eine Öffnung oder Unterbrechung dieser Leitungszweige 43a, 43b, 43c, 43d sorgt. Gemäß dieser Variante könnte die Mikrophon-Lautsprecher-Kombination am Belt-Pack 10 zugeschaltet oder abgeschaltet werden, ohne, dass die Verbindung zwischen Mikroprozessor 34 und Headset 11 beeinträchtigt wird.

Bei einer weiteren Ausgestaltung der Erfindung ist der Schalter 29 nicht oder nicht nur manuell von einer Bedienperson schaltbar, sondern er kann über eine zentrale Steuereinheit 34 des Belt-Packs 10 angesprochen werden. Hierzu kann beispielsweise der Schalter 29 über eine in Fig. 4 nicht dargestellte Steuerleitung mit dem Mikroprozessor 34 verbunden sein. Zum anderen können unmittelbar an dem Mikroprozessor 34 entsprechende Anschlusskontakte mit Verbindungsleitungen zu Lautsprecher 28 und Mikrophon 27 verlaufen, wobei eine interne Schaltung dieser Leitungswege innerhalb des Mikroprozessors 34 erfolgen kann.

In diesem Zusammenhang sei angemerkt, dass der Mikroprozessor 34 bei dem Ausführungsbeispiel der Fig. 4 lediglich symbolisch eine Steuerlogik und eine Intelligenz oder Steuerelektronik des Belt-Packs 10 andeuten soll.

Insbesondere ist, was Fig. 4 nicht zeigt, diese Steuerlogik 34 auf nicht dargestellte Weise mit dem Kommunikationsmodul 25a verbunden, um die über die Leiter 40a, 40b, 40c, 40d, 38a, 38b, 38c, 38d zu übermittelnden Audio-Informationen in elektrische Signale zu wandeln, die über Funk übermittelt werden können.

Weiter sei an dieser Stelle angemerkt, dass der Mikroprozessor 34 bzw. eine Steuerlogik - was in Fig. 4 nicht dargestellt ist - mit den programmierbaren oder konfigurierbaren Tasten und Elementen 26a, 26b, 26e, 26f des Belt-Packs 10 gemäß Fig. 2 verbunden ist. Mittels einer Betätigung dieser Elemente 26a, 26b, 26e, 26f kann eine entsprechende Konfiguration des Schalters 29 und/oder eine Konfiguration des Lautsprechers 28 und des Mikrophons 27 vorgenommen werden.

Weiter sei an dieser Stelle angemerkt, dass eine in Fig. 4 nicht dargestellte Detektionseinrichtung das Vorhandensein eines Steckers 15 in der Buchse 16 detektieren kann. Eine solche Detektionseinrichtung nach Art eines Präsenzsensors kann beispielsweise ein Tastschalter sein, der buchsenseitg fest montiert ist, und bei Einführen eines Steckers 15 in die Buchse betätigt oder ausgelöst wird. Ein solcher Schalter kann z. B. ebenfalls mit der Steuerlogik 34 verbunden sein, und die Präsenz eines Steckers, und damit ein angeschlossenes Headset 11, an die Steuerlogik 34 melden. Infolge einer solchen Meldung kann die Steuerintelligenz 34 bei Bedarf eine entsprechende Betätigung des Schalters 29 vornehmen.

## Patentansprüche

1. Mobiles, von einem Benutzer (32) tragbares und als Belt-Pack (10) ausgebildetes Endgerät zur Verwendung in einem Intercom-Netzwerk (17), umfassend ein Gehäuse (44) mit einem Anschluss (16) für ein Headset (11) mit einem Headset-Mikrophon (13) und einem Headset-Lautsprecher (12), und weiter umfassend ein Kommunikationsmodul (25a), mit dem Audioinformationen an andere Teilnehmer (19a, 19b) des Intercom-Netzwerkes drahtlos übermittelbar sind, **dadurch gekennzeichnet, dass** in oder an dem Gehäuse (44) ein Mikrophon (27) und ein Lautsprecher (28) angeordnet ist.

2. Endgerät nach Anspruch 1, **dadurch gekennzeichnet, dass** in oder an dem Gehäuse (44) wenigstens ein Schalter (29) angeordnet ist, mit dem das Mikrophon (27) und/oder der Lautsprecher (28), insbesondere von der Bedienperson, einschaltbar und/oder ausschaltbar ist.

3. Endgerät nach Anspruch 2, **dadurch gekennzeichnet, dass** infolge einer Betätigung des Schalters (29) das Mikrophon (27) parallel zu dem Headset-Mikrophon (13) und/oder der Lautsprecher (28) parallel zu dem Headset-Lautsprecher (12) schaltbar ist.

4. Endgerät nach Anspruch 2, **dadurch gekennzeichnet, dass** infolge einer Betätigung des Schalters (29) das Mikrophon (27) und/oder der Lautsprecher (28) einschaltbar und zugleich das Headset-Mikrophon (13) und/oder der Headset-Lautsprecher (12) ausschaltbar sind.

5. Endgerät nach einem der Ansprüche 2 bis 4, **dadurch gekennzeichnet, dass** bei einer Vornahme einer Verbindung zwischen Headset (11) und Anschluss (16) automatisch ein Ansprechen des Schalters (29) erfolgt.

6. Endgerät nach einem der vorangegangenen Ansprüche, **dadurch gekennzeichnet, dass** an dem Gehäuse (44) wenigstens eine Anzeige (30) angeordnet ist, die einen Funktionszustand des Mikrophons (27) und/oder einen Funktionszustand des Lautsprechers (28) signalisiert oder anzeigt.

7. Endgerät nach einem der vorangegangenen Ansprüche, **dadurch gekennzeichnet, dass** an dem Gehäuse (44) wenigstens eine Anzeige (30) angeordnet ist, die einen Schaltzustand eines Schalters (29) für das Mikrophon (27) und den Lautsprecher (28) signalisiert.

8. Endgerät nach einem der vorangegangenen Ansprüche, **dadurch gekennzeichnet, dass** an dem Gehäuse (44) eine Konfigurationseinrichtung (26a, 26b) angeordnet ist, mit der das Mikrophon (27) und/oder der Lautsprecher (28) und/oder ein Schalter (29) für das Mikrophon (27) und den Lautsprecher (28) konfigurierbar sind.

9. Endgerät nach einem der vorangegangenen Ansprüche, **dadurch gekennzeichnet, dass** das Kommunikationsmodul (25a) zur Bereitstellung einer Funkverbindung mit anderen Teilnehmern des Intercom-Netzwerkes (17) ausgebildet ist.

10. Endgerät nach Anspruch 9, **dadurch gekennzeichnet, dass** die Funkverbindung nach dem DECT-Standard ausgebildet ist.

11. Endgerät nach einem der vorangegangenen Ansprüche, **dadurch gekennzeichnet, dass** an dem Gehäuse (44) eine Befestigungseinrichtung (33) angeordnet ist, mit der das Belt-Pack (10) an einem Gürtel (42) einer Bedienperson (32) festlegbar ist.

12. Endgerät nach einem der vorangegangenen Ansprüche, **dadurch gekennzeichnet, dass** der Anschluss (16) für das Headset (11) als Buchse zur Aufnahme eines XLR-Steckers (15), insbesondere eines XLR-female-4-Pol-Steckers, ausgebildet ist.
